# EUROPÄISCHE PATENTSCHRIFT

(11) **EP 1 056 798 B1**
(45) Veröffentlichungstag und Bekanntmachung des Hinweises auf die Patenterteilung: **24.07.2002**
(21) Anmeldenummer: 99910264.3
(22) Anmeldetag: 23.02.1999
(51) Int. Cl.: C08G 69/08, C08G 69/04

(54) **VERFAHREN ZUR HERSTELLUNG VON POLYAMIDEN AUS AMINOCARBONSÄUREVERBINDUNGEN**
METHOD FOR PRODUCING POLYAMIDES FROM AMINO CARBOXYLIC ACID COMPOUNDS
PROCEDE DE PREPARATION DE POLYAMIDES A BASE DE COMPOSES D'ACIDE AMINOCARBOXYLIQUE

(30) Priorität: 27.02.1998 DE 19808490
(43) Veröffentlichungstag der Anmeldung: 06.12.2000
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE)
(74) Vertreter: Isenbruck, Günter, Dr.
(86) Internationale Anmeldenummer: EP9901169
(87) Internationale Veröffentlichungsnummer: WO9943734

(56) Entgegenhaltungen:
- WO-A-98/08889
- DE-A- 3 534 817
- DE-A- 4 339 648
- DE-A- 4 443 125
- US-A- 4 568 736
- S. AHARONI: "n-Nylons: Their Synthesis, Structure, and Properties" 1997 , JOHN WILEY & SONS , CHICHESTER XP002107302 siehe Seite 201 - Seite 202 siehe Seite 400

## Beschreibung

Die Erfindung betrifft Verfahren zur Herstellung von Polyamiden aus Aminocarbonsäureverbindungen, die erhaltenen Polyamide und deren Verwendung.

Polyamide können außer aus Caprolactam unter anderem auch aus Aminocapronitril hergestellt werden.

Die US 2,245,129 beschreibt eine diskontinuierliche zweistufige Herstellung von Polycaprolactam aus Aminocapronitril ("ACN") und Wasser bei einer Temperatur im Bereich von 150 bis 300°C und einem speziellen Temperaturprogramm in Abhängigkeit der zugegebenen Wassermenge und einem Druck von max. 30 bar. Nachteilig an diesem Verfahren sind die langen Reaktionszeiten (20 h in der ersten Stufe), die niedrige Viskosität des erhaltenen Polycaprolactams sowie der hohe Gehalt an flüchtigen Basen (im wesentlichen primäre Säureamide) im Vergleich zu einem Polycaprolactam, hergestellt aus Caprolactam.

In der US 4,568,736 werden die in der US 2,245,129 beschriebenen Probleme teilweise durch den Einsatz von phosphor- und schwefelhaltigen Katalysatoren gelöst. Die Verwendung dieser Katalysatoren verbessert die geringe Raum-Zeit-Ausbeute des in der US 2,245,129 beschriebenen Verfahrens. Der Gehalt an flüchtigen Basen sämtlicher Produkte, die nach diesem Verfahren hergestellt werden, ist jedoch immer noch zu hoch, so daß die Polyamide schwierig zu verarbeiten sind und eine verringerte Carboxyl-Endgruppenzahl aufweisen. Die Produkte der Verfahren zeigen aufgrund der stöchiometrischen Diskrepanz zwischen Amino- und Carboxyl-Endgruppen einen unzureichenden Polymerisationsgrad und einen langsamen Molekulargewichtsaufbau während der Temperung. Ferner ist eine vollständige Abtrennung der Katalysatoren praktisch nicht möglich, so daß das chemische und physikalische Verhalten der unter Verwendung der Katalysatoren hergestellten Polymeren wie Art und Menge der Endgruppen oder Abknickverhalten beim Verspinnen negativ beeinflußt wird.

Aufgabe der vorliegenden Erfindung ist die Bereitstellung eines Verfahrens zur Herstellung von Polyamiden, das die Nachteile der vorstehenden Verfahren vermeidet. Das Verfahren soll mit hohen Umsätzen zu Polyamiden führen, wobei die Eigenschaften der Polyamide nicht durch zusätzliche Komponenten, die nicht abgetrennt werden können, verschlechtert sind.

Die Aufgabe wird erfindungsgemäß gelöst durch ein Verfahren zur Herstellung von Polyamiden durch Umsetzung von Aminocarbonsäureverbindungen der allgemeinen Formel I

H₂N-(CH₂)ₘ-C(O)R¹ (I)

in der R¹ für OH, O-C₁₋₁₂-Alkyl oder NR²R³ mit R² und R³ unabhängig voneinander Wasserstoff, C₁₋₁₂-Alkyl oder C₅₋₈-Cycloalkyl und m für eine ganze Zahl von 3 bis 12 stehen,
gegebenenfalls im Gemisch mit Aminonitrilen und deren Hydrolyseprodukten und gegebenenfalls in Anwesenheit von Wasser,
in flüssiger Phase bei einem Druck von 0,1 bis 35 x 10⁶ Pa und einer Temperatur von 175 bis 350°C in Gegenwart von Metalloxiden als Heterogenkatalysatoren, wobei die Metalloxide in einer Form eingesetzt werden, die die mechanische Abtrennung aus dem Reaktionsgemisch erlaubt, und im Verlauf oder nach Ende der Polymerisation aus dem Reaktionsgemisch entfernt werden.

Der Anteil an Aminocarbonsäureverbindung(en) im zu polymerisierenden Gemisch beträgt mindestens 75 Gew.-%, besonders bevorzugt mindestens 95 Gew.-%.

Es wurde gefunden, daß der Umsatz von Aminocarbonsäureverbindungen oder Mischungen, die Aminocarbonsäureverbindungen und Aminonitrile enthalten, zu Polyamid führt, wobei die Umsetzung beschleunigt und verbessert ist. Der Einsatz von homogenen Katalysatoren, die die Produkteigenschaften beeinträchtigen, konnte vermieden werden.

Als Ausgangsstoffe im erfindungsgemäßen Verfahren werden Aminocarbonsäureverbindungen der allgemeinen Formel I

H₂N-(CH₂)ₘ-C(O)R¹ (I)

in der R¹ für -OH, -O-C₁₋₁₂-Alkyl oder -NR²R³ unabhängig voneinander Wasserstoff, C₁₋₁₂-Alkyl und C₅₋₈-Cycloalkyl, und m für 3, 4, 5, 6, 7, 8, 9, 10, 11 oder 12 stehen,
gegebenenfalls im Gemisch mit Aminonitrilen eingesetzt.

Besonders bevorzugte Aminocarbonsäureverbindungen sind solche, in denen R¹ OH, -O-C₁₋₄-Alkyl wie -O-Methyl, -O-Ethyl, -O-n-Propyl, -O-i-Propyl, -O-n-Butyl, -O-sek.Butyl, -O-tert.Butyl und -NR²R³ wie -NH₂, -NHMe, -NHEt, -NMe₂ und -NEt₂ bedeuten, und m für 5 steht.

Ganz besonders bevorzugt sind 6-Aminocapronsäure, 6-Aminocapronsäuremethylester, 6-Aminocapronsäureethylester, 6-Aminocapronsäuremethylamid, 6-Aminocapronsäuredimethylamid, 6-Aminocapronsäureethylamid, 6-Aminocapronsäuredithylamid und 6-Aminocapronsäureamid.

Die Ausgangsverbindungen sind im Handel erhältlich oder beispielsweise gemäß EP-A-0 234 295 und Ind. Eng. Chem. Process Des. Dev. 17 (1978)9-16 herstellbar.

Als Aminonitril können prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe einen Alkyl-Spacer mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5,151,543. Es können auch Gemische mehrerer Aminonitrile eingesetzt werden.

Als Katalysatoren zur heterogenen Katalyse können bekannte Metalloxide, wie Zirkonoxid, Alurniniumoxid, Magnesiumoxid, Ceroxid, Lanthanoxid und bevorzugt Titandioxide wie auch Beta-Zeolithe und Schichtsilikate zur heterogenen Katalyse eingesetzt werden. Besonders bevorzugt ist Titandioxid in der sogenannten Anatas-Modifikation. Des weiteren wurde gefunden, daß auch Kieselgel, Zeolithe und dotierte Metalloxide, wobei zum Beispiel Ruthenium, Kupfer oder Fluorid zur Dotierung eingesetzt werden, die Umsetzung der genannten Edukte deutlich verbessern. Erfindungsgemäß weist der heterogene Katalysator eine makroskopische Form auf, die eine mechanische Abtrennung der Polymerschmelze vom Katalysator, beispielsweise durch Siebe oder Filter, ermöglicht. Vorgeschlagen wird der Katalysator-Einsatz in Strang- oder Granulat-Form oder als Beschichtung auf Füllkörpern und/oder Einbauten.

In einer anderen Ausführungsform werden die Aminocarbonsäureverbindungen mit homogen gelösten sauren Cokatalysatoren oder einem Gemisch aus verschiedenen katalytisch wirkenden Verbindungen in Gegenwart der oben genannten heterogenen Katalysatoren umgesetzt. Als Cokatalysatoren werden hierbei bevorzugt saure Katalysatoren, wie die oben genannten Carbonsäuren, Terephthalsäure, Adipinsäure, Propionsäure und Isophthalsäure, oder sauerstoffhaltige Phosphorverbindungen, insbesondere Phosphorsäure, phosphorige Säure, hypophosphorige Säure, deren Alkalimetall- und Erdalkalimetallsalze und Ammoniumsalze, oder sauerstoffhaltige Schwefelverbindungen, insbesondere Schwefelsäure und schwefelige Säure eingesetzt.

Bevorzugt wird ein Brönsted-Säurekatalysator, ausgewählt aus einem Beta-Zeolith-, Schichtsilikat- oder einem Titandioxid-Katalysator aus 70 bis 100 Gew.-% Anatas und 0 - 30 Gew.-% Rutil, in dem bis zu 40 Gew.-% des Titandioxids durch Wolframoxid ersetzt sein können, eingesetzt. Der Anteil an Anatas im Titandioxid-Katalysator sollte möglichst hoch sein. Vorzugsweise wird ein reiner Anatas-Katalysator eingesetzt. Der Katalysator weist vorzugsweise ein Porenvolumen von 0,1 bis 5 ml/g, besonders bevorzugt 0,2 bis 0,5 ml/g auf. Der mittlere Porendurchmesser beträgt vorzugsweise 0,005 bis 0,1 um, besonders bevorzugt 0,01 bis 0,06 µm. Wird mit hochviskosen Produkten gearbeitet, sollte der mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100 % Anatas; 0,3 ml/g Porenvolumen; 0,02 µm mittlerer Porendurchmesser; 32 N Schneid_{härte;} 116 m²/g BET-Oberfläche oder 84 Gew.-% Anatas; 16 Gew.-% Rutil; 0,3 ml/g Porenvolumen; 0,03 um mittlerer Porendurchmesser; 26 N Schneidhärte; 46 m²/g BET-Oberfläche. Die Katalysatoren können dabei aus handelsüblichen Pulvern, wie sie beispielsweise von Degussa, Finnti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogenous catalysis", VCH Weinheim, 1997, Seiten 98ff beschrieben erfolgen.

Die verwendeten Reaktionsgefäße werden derart mit dem Katalysatormaterial gefüllt, daß eine möglichst große Katalysatoroberfläche sämtlichen Volumenelementen der Reaktionslösung zur Verfügung steht. Gewünschtenfalls kann die Reaktionsmischung umgepumpt werden, um den Austausch der Reaktanden an der Katalysatoroberfläche zu verbessern.

Wird die Reaktionsmischung in Gegenwart des Festbettkatalysators umgesetzt, so beträgt die Massetemperatur der Mischung vorzugsweise 175 bis 350°C, bevorzugt 200 bis 300°C und besonders bevorzugt 230 bis 270°C. Hierbei hängt die Temperaturuntergrenze auch vom Polymerisationsgrad und vom Wassergehalt der Schmelze ab, da ein flüssig-fest-Phasenübergang vermieden werden sollte. In Abwesenheit des Festbettkatalysators beträgt die Massetemperatur 200 bis 350°C, bevorzugt 220 bis 300°C und besonders bevorzugt 240 bis 280°C.

Nach dem erfindungsgemäßen Verfahren werden die genannten Verbindungen beziehungsweise Mischungen in Gegenwart der Metalloxid-Katalysatoren und gegebenenfalls mit Wasser zu Polyamid umgesetzt.

Die Ausführungsformen des Verfahrens sind durch Temperatur-Zeit- und Druck-Zeit-Profile, die von den eingesetzten Reaktanden und Katalysatoren abhängen, charakterisiert. Die Zeitabhängigkeit der Druck- und Temperaturwerte hängt hierbei direkt vom Reaktionsfortschritt, von der gewünschten Molekulargewichtsverteilung beziehungsweise der Viskosität des Endproduktes und von der abzuscheidenden Wassermenge in der Reaktionsmischung ab.

Die Anzahl der Verfahrensstufen und der Wassergehalt der Reaktionsmischung sind abhängig von der Zusammensetzung und insbesondere vom Säureamid- und Nitrilgruppengehalt der Reaktionsmischung. Ein- oder zweistufige Ausführungsformen werden bevorzugt dann eingesetzt, wenn die Reaktanden keine Säureamid- und Nitrilgruppen aufweisen oder der Säureamid- und Nitrilgruppengehalt der Reaktionsmischung klein ist und vorzugsweise weniger als 30 mol.-%, bevorzugt weniger als 5 mol-%, bezogen auf die Ausgangsmonomere, beträgt. Die einstufige Ausführungsform ist besonders bevorzugt für den Fall, wenn ausschließlich Aminocapronsäure umgesetzt werden soll. Werden Mischungen umgesetzt, die Aminonitrile und/oder Säureamidgruppen enthalten, so sind die drei- und vierstufigen Ausführungsformen besonders bevorzugt.

### Einstufige Fahrweise

In der einstufigen Ausführungsform werden Druck und Temperatur bevorzugt so eingestellt, daß eine flüssige Phase, die das Umsetzungsgemisch enthält, und eine gasförmige Phase, die abgetrennt werden kann, erhalten werden.

Die Polykondensation von Mischungen, bevorzugt mit hohem Aminocapronsäuregehalt, kann dann beispielsweise analog zu bekannten kontinuierlichen oder diskontinuierlichen Verfahren, die zur Caprolactam-Polymerisation eingesetzt werden und in DE-A-44 13 177, DE-A-14 95 198, DE-A-25 58 480, EP-A-0 020 946 sowie in Polymerization Processes, Seiten 424 bis 467, Interscience, New York, 1977 und im Handbuch der Technischen Polymerchemie, Seiten 546 bis 554, VCH Verlagsgesellschaft, Weinheim, 1993, beschrieben sind, durchgeführt werden, wobei jedoch die oben genannten niedrigeren Reaktionstemperaturen gewählt werden können. Der Wassergehalt der Reaktionsmischung hängt hierbei insbesondere vom Säureamidgehalt der Mischung ab.

Werden ausschließlich Aminoalkylsäuren und insbesondere Aminocapronsäure eingesetzt, so erfolgt die Umsetzung der Reaktanden bevorzugt ohne Wasser.

### Mehrstufige Fahrweise

Soll ein Gemisch aus Aminocarbonsäureverbindungen und Aminonitrilen, umgesetzt werden, so weisen die erfindungsgemäßen Ausführungsformen des Verfahrens bevorzugt 2, 3 oder 4 Verfahrensstufen auf. Die Polymerisation kann in mindestens drei Stufen erfolgen, wobei in der ersten Stufe unter einem erhöhten Druck gearbeitet wird, bei dem das Reaktionsgemisch mit Ausnahme des Heterogenkatalysators einphasig-flüssig vorliegt, und in der letzten Stufe unter einem Druck in einem Bereich von 0,01 x 10⁵ bis 10 x 10⁵ Pa nachkondensiert wird, wobei der Heterogenkatalysator in einer oder beiden Stufen vorliegen kann. Besonders bevorzugt sind Ausführungsformen mit 4 Verfahrensstufen, wenn Säureamid- und/oder Nitrilgruppen im Reaktionsgemisch vorliegen.

Die Aufgabe wird dabei erfindungsgemäß gelöst durch ein, vorzugsweise kontinuierliches, Verfahren zur Herstellung des Polyamids durch Umsetzung mindestens einer Aminocarbonsäureverbindung, gegebenenfalls im Gemisch, das die folgenden Stufen umfaßt:
(1) Umsetzung der Aminocarbonsäureverbindungen, gegebenenfalls im Gemisch mit Aminonitrilen und deren Hydrolyseprodukten, wobei der Anteil an Aminocarbonsäureverbindungen im zu polymerisierenden Gemisch mindestens 75 Gew.% beträgt, und gegebenenfalls in Gegenwart von wasser bei einer Temperatur von 175 bis 300°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthalten kann, wobei ein Umsetzungsgemisch erhalten wird,
(2) weitere Umsetzung des Umsetzungsgemischs bei einer Temperatur von 150 bis 350°C und einem Druck, der niedriger ist als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine Gasphase und eine flüssige oder eine feste Phase oder ein Gemisch aus fester und flüssiger Phase erhalten werden, und die Gasphase von der flüssigen oder der festen Phase oder dem Gemisch aus flüssiger und fester Phase abgetrennt wird, und
(3) Versetzen der flüssigen oder der festen Phase oder des Gemischs aus flüssiger und fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird.

Vorzugsweise umfaßt das vorstehende Verfahren zusätzlich folgende Stufe:
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine, Wasser und gegebenenfalls Ammoniak enthaltende Gasphase und eine flüssige oder feste Phase oder ein Gemisch aus flüssiger und fester Phase, die (das) jeweils das Polyamid enthält, erhalten werden.

Die Verfahrensstufen entsprechen den vorstehenden Stufen (1), (2), (3) und (4), wobei bei einer zweistufigen Ausführungsform des Verfahrens die Stufen (1) und (4), bei einer dreistufigen Ausführungsform die Stufen (1), (2), und (4) und bei einer vierstufigen Ausführungsform die Stufen (1) bis (4) eingesetzt beziehungsweise verknüpft werden.

Die oben beschriebenen Verfahren, d.h. die erfindungsgemäße Abfolge der Stufen (1) und (4) oder (1), (2), und (4) oder (1) bis (4) kann entweder diskontinuierlich, d.h. in einem Reaktor zeitlich nacheinander, oder kontinuierlich, d.h. in aufeinanderfolgenden Reaktoren zur gleichen Zeit, durchgeführt werden. Selbstverständlich ist es auch möglich, einen Teil der Stufen (1) und (2) kontinuierlich und die restliche(n) diskontinuierlich auszuführen.

Die erfindungsgemäße Umsetzung von Aminonitrilen mit Wasser zu einem Gemisch von Aminocapronsäureverbindungen kann in beliebigen diskontinuierlichen oder kontinuierlichen Stufen erfolgen. Ziel ist es, eine teilweise Hydrolyse und gegebenenfalls Polymerisation der Nitrile zu erreichen. In einer geeigneten Ausführungsform kann die Reaktionsmischung in einem Druckbehälter mit Wasser versetzt und erhitzt werden. Das molare Verhältnis zwischen Aminonitril und Wasser sollte 1:0,1 bis 1:10, bevorzugt 1:0,5 bis 1:6 und besonders bevorzugt 1:1 bis 1:4 betragen. Die Temperatur während der Reaktion sollte im Bereich von 150 bis 300°C, bevorzugt 200 bis 280°C und besonders bevorzugt 220 bis 270°C liegen. Die Temperatur muß während der Reaktion nicht konstant gehalten werden, sondern kann beispielsweise als Temperaturrampe gefahren werden.

In einer weiteren möglichen Ausführungsform kann das Reaktionsgemisch aus Aminonitrilen und einem vergleichsweise geringen Anteil an Wasser nach Maßgabe der Reaktion mit weiterem Wasser versetzt werden. Diese halbkontinuierliche Fahrweise führt zu vergleichsweise geringen sich einstellenden Systemdrücken.

Es ist weiterhin möglich, die erfindungsgemäße Umsetzung in einem kontinuierlichen Rührkessel unter Druck durchzuführen. Dazu wird die Reaktionsmischung kontinuierlich in einen Rührkessel dosiert und gleichzeitig über ein Druckhalteventil Reaktionsmischung abgeführt.

Alle genannten Fahrweisen können mit und ohne Katalysator betrieben werden. Als Katalysatoren kommen bevorzugt die vorstehend beschriebenen brönstedtsauren Metalloxid-Katalysatoren in Frage.

Als Reaktionsprodukt erhält man häufig eine Mischung polyamidbildender Monound Oligomere, deren Anteil in Abhängigkeit von der Fahrweise und den Reaktionsbedingungen (Wasseranteil, Druck, Temperatur) unterschiedlich ist. Es wurde gefunden, daß die Hydrolyse der Nitrilgruppen bei hohen Reaktionstemperaturen und langen Reaktions- oder Verweilzeiten generell besser erfolgt.

Das in der Vorstufe entstandene Umsetzungsgemisch aus Aminonitrilen, Aminocarbonsäureamiden, Aminocarbonsäuren und anderen Verbindungen kann dann in einem mehrstufigen Verfahren wie vorstehend beschrieben zu Polyamid umgesetzt werden. Hierbei werden Aminocapronsäureverbindungen oder deren Mischungen in einer ersten Stufe mit Wasser umgesetzt, teilweise hydrolytisch polymerisiert und in anschließenden Reaktionsstufen weiterverarbeitet. Das Gesamtverfahren umfaßt 3 oder 4 Verfahrensstufen, wobei bevorzugt in der ersten und in der dritten Verfahrensstufe das Reaktionsgemisch einphasig-flüssig vorliegt und bevorzugt in die dritte Verfahrensstufe eine flüssige Phase, die Wasser enthält, zugeführt wird.

Im Rahmen des erfindungsgemäßen Verfahrens kann auch eine Kettenverlängerung oder eine Verzweigung oder eine Kombination aus beiden durchgeführt werden. Dazu werden dem Fachmann bekannte Substanzen zur Verzweigung oder zur Kettenverlängerung von Polymeren dem Reaktionsgemisch zugesetzt. Die Substanzen können sowohl dem Ausgangsgemisch als auch dem Reaktionsgemisch, welches nachkondensiert wird, zugesetzt werden. Als - auch als Gemisch - einsetzbare Substanzen sind zu nennen:

Trifunktionelle Amine oder Carbonsäuren als Verzweiger bzw. Vernetzer. Beispiele geeigneter mindestens trifunktioneller Amine oder Carbonsäuren sind in der EP-A-0 345 648 beschrieben. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ **(I)**

in der
R H oder -(CH₂)ₙ-NR¹₂ mit
R¹ H oder -(CH₂)ₙ-NR²₂ mit
R² H oder -(CH₂)ₙ-NR³₂ mit
R³ H oder -(CH₂)ₙ-NH₂ ist,
n einen ganzzahligen Wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen oder Carbonsäuren. Geringe Mengen an mindestens trifunktionellen Aminen können jedoch in den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können sie Diamine sein. Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine werden vorzugsweise in Mengen von 1 bis 55, besonders bevorzugt 1 bis 30, insbesondere 1 bis 15 µm/g Polyamid eingesetzt.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- beziehungsweise Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepropft werden.

Die unter den Polymeren A beschriebenen Copolymere von α-Olefinen, darunter insbesondere die Ethylencopolymere können anstelle als Polymere A auch als Kautschuke eingesetzt und den erfindungsgemäßen Zusammensetzungen als solche beigemischt werden.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von fünktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnaceoder Gasruß eingesetzt wird (siehe hierzu G Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente beziehungsweise Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, gegebenenfalls in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren beziehungsweise deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Bevorzugt werden die Stoffe, die nicht homogen in der Reaktionsmischung gelöst sind, wie zum Beispiel Pigmente und Füllstoffe, der Reaktionsmischung nach den Herstellungsphasen, die in Gegenwart des Festbettkatalysators ablaufen, zugeführt.

Die erfindungsgemäß erhaltenen Polyamide, insbesondere Polyamid 6 und dessen Copolymere, kann man zur Herstellung von Fasern, Filmen und Fomikörpern verwenden.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Methoden, wie sie z.B. in der DE-A 43 21 683 (S. 3, Z. 54 bis S. 4, Z. 3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamid zuerst mit einer wäßrigen Lösung von Caprolactam und anschließend mit Wasser extrahiert und/oder der Gasphasenextraktion (beispielsweise beschreiben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Die Erfindung wird nachstehend anhand von Beispielen näher erläutert.

### Beispiele

### Probenpräpartation und Analytik

Die sogenannte relative Viskosität (RV) als Maß für den Molekulargewichtsaufbau und Polymerisationsgrad wurde in 1 Gew.-%iger Lösung bei extrahiertem Material und in 1,1 Gew.-%iger Lösung bei unextrahierter Polymermischung in 96%iger Schwefelsäure bei 25°C mittels Viskosimeter nach Ubbelohde bestimmt. Unextrahierte Polymere wurden vor der Analyse 20 Stunden im Vakuum getrocknet.

Die Bestimmung des Amino- und Carboxylendgruppengehalts erfolgte am extrahierten Produkt und wurde als acidimetrische Titration durchgeführt. Die Aminogruppen wurden in Phenol/Methanol 70:30 (Gew.-Teile) als Lösungsmittel mit Perchlorsäure titriert. Die Carboxylendgruppen wurden in Benzylalkohol als Lösungsmittel mit Kalilauge titriert.

Zur Extraktion wurden 100 Gew.-Teile der Polymermischung mit 400 Gew.-Teilen vollentsalztem Wasser bei einer Temperatur von 100°C für eine Dauer von 32 Stunden unter Rückfluß gerührt beziehungsweise extrahiert und nach Entfernen des Wassers milde, d.h. ohne Nachkondensation, bei einer Temperatur von 100°C für eine Zeitdauer von 20 Stunden im Vakuum getrocknet.

Die Auftrennung der Reaktionsmischungen in Einzelsubstanzen und Analysen der Massengehalte erfolgte durch Hochdruck-Flüssigkeitschromatographie (HPLC). Die Vorgehensweise ist in Anal. Chem. 43, 880 (1971) beschrieben. Die Produkte wurden zunächst in einem Gemisch aus Wasser, Natriumbarat-Pufferlösung und Acetonitril gelöst, mit OPA derivatisiert und anschließend mit einer HPLC-Säule des Typs RP18 aufgetrennt. Die Konzentrationen wurden über eine Eichreihe korreliert

### Durchführung der Versuche

Das Katalysatorgranulat bestand zu 100 % aus TiO₂ von Finnti, Typ S150 in der sogenannten Anatas-Modifikation und hatte eine Stranglänge zwischen 2 und 14 mm, eine Strangdicke von ca. 4 mm und eine spezifische Oberfläche von mehr als 100 m²/g.

Die Reinheit des eingesetzten Aminocapronitrils betrug 99,5 %.

### Verfahren zur diskontinuierlichen Umsetzung von Aminocarbonsäureverbindungen

### Beispiele I-1

Die Versuche wurden im Autoklaven mit und ohne (als Vergleichsbeispiel) Katalysatorgranulatschüttung durchgeführt, wobei das Granulat die Reaktionsmischung vollständig bedeckte. Nach dem Einfüllen der Aminocapronsäure und gegebenenfalls des Katalysators wurde der Autoklav verschlossen, entlüftet und mehrmals mit Stickstoff gespült. Nach der 1,25 Stunde dauernden Aufheizphase auf die gewünschte Reaktionstemperatur von 230°C bei einem Druck von bis zu 18 bar, manuell geregelt mit Hilfe eines Ventils, wurde der Druck im Autoklaven innerhalb von 1 Stunde auf Umgebungsdruck (ca. 1 bar) abgesenkt, so daß die entstandene Präpolymerschmelze nachkondensieren konnte. Das Produkt wurde sodann strangförmig in ein Wasserbad ausgefahren.

### Beispiel I-2

| Polymereigenschaften* | relative Viskosität | Carboxylendgruppen [meq/kg] | Aminoendgruppen [meq/kg] |
|---|---|---|---|
| mit Katalysator | 2,09 | 112 | 70 |
| ohne Katalysator | 1,80 | 99 | 126 |

| | | | |
|---|---|---|---|
| * gemessen am unextrahierten Produkt | | | |

Es wurde wie in Beispiel I-1 vorgegangen, die Reaktionstemperatur betrug jedoch 250°C.

### Ergebniss I-2

| Polymereigenschaften* | relative Viskosität | Carboxylendgruppen [meq/kg] | Aminoendgruppen [meq/kg] |
|---|---|---|---|
| mit Katalysator | 1,91 | 105 | 89 |
| ohne Katalysator | 1,69 | 122 | 150 |

| | | | |
|---|---|---|---|
| * Gemessen am unextrahierten Produkt. | | | |

### Vorstufe zur Umsetzung von Aminonitrilen zu Aminocarbonsäuremischungen -

### Beispiel II-1

In einem 2 Liter-Druckbehälter mit Heizmantel und Ankerrührer wurden 1400 g einer Reaktionsmischung bestehend aus Aminocapronitril und Wasser im molaren Verhältnis 1:4, bei 250°C im geschlossenen Reaktor gerührt. Der sich einstellende Eigendruck betrug 48 bar. Nach 2 Stunden betrug der Umsatz des Aminocapronitrils 96,6 %, die Analyse der Reaktionsmischung ist in Tabelle II wiedergegeben.

### Beispiel II-2

In einem 2 Liter-Druckbehälter mit Heizmantel und Ankerrührer wurden 1400 g einer Reaktionsmischung aus Aminocapronitril und Wasser im molaren Verhältnis 1:1 bei 250°C im geschlossenen Reaktor gerührt. Der sich einstellende Eigendruck betrug 30 bar. Nach 200 Minuten betrug der Umsatz des Aminocapronitrils 36 %, die Analyse der Reaktionsmischung ist in Tabelle II wiedergegeben.

### Beispiel II-3

In einem 2 Liter-Druckbehälter mit Heizmantel und Ankerrührer wurden 1400 g einer Reaktionsmischung aus Aminocapronitril und Wasser im molaren Verhältnis 1:4 bei 230°C im geschlossenen Reaktor gerührt. Der sich einstellende Eigendruck betrug 39 bar. Nach 3 Stunden betrug der Umsatz des Aminocapronitrils 96 %, die Analyse der Reaktionsmischung ist in Tabelle II wiedergegeben.

### Beispiel II-4

In einem 2 Liter-Druckbehälter mit Heizmantel und Ankerrührer wurden 1400 g einer Reaktionsmischung aus Aminocapronitril und Wasser im molaren Verhältnis 1:4 bei 250°C gerührt. Der sich einstellende Eigendruck betrug 43 bar. Während der Reaktionszeit von 3 Stunden wurde kontinuierlich Wasser mit einem Massestrom von 100 g/h in den Reaktor gefahren. Über ein Überströmventil wurde ebenfalls fortwährend aus der Gasphase ein Wasser/Ammoniakgemisch abgeführt. Nach drei Stunden betrug der Umsatz des Aminocapronitrils > 99 %, die Analyse der Reaktionsmischung ist in Tabelle II wiedergegeben.

### Beispiel II-5

In 5,5 ml fassende Autoklaven wurden 4,5 g eines Reaktionsgemisches aus 2,7 g Aminocapronitril, 1,8 g Wasser und 0,5 g eines Titandioxid-Katalysators (Typ P25, von Degussa, grobes Pulver) gegeben. Der Autoklav wurde verschlossen und 2 Stunden im Ölbad bei 250°C belassen. Nach der Reaktion wurde der Autoklav schnell abgekühlt und das Reaktionsgemisch entnommen. Der Umsatz des Aminocapronitril betrug ca. 98 %, die Analyse der Reaktionsmischung ist in Tabelle II wiedergegeben.

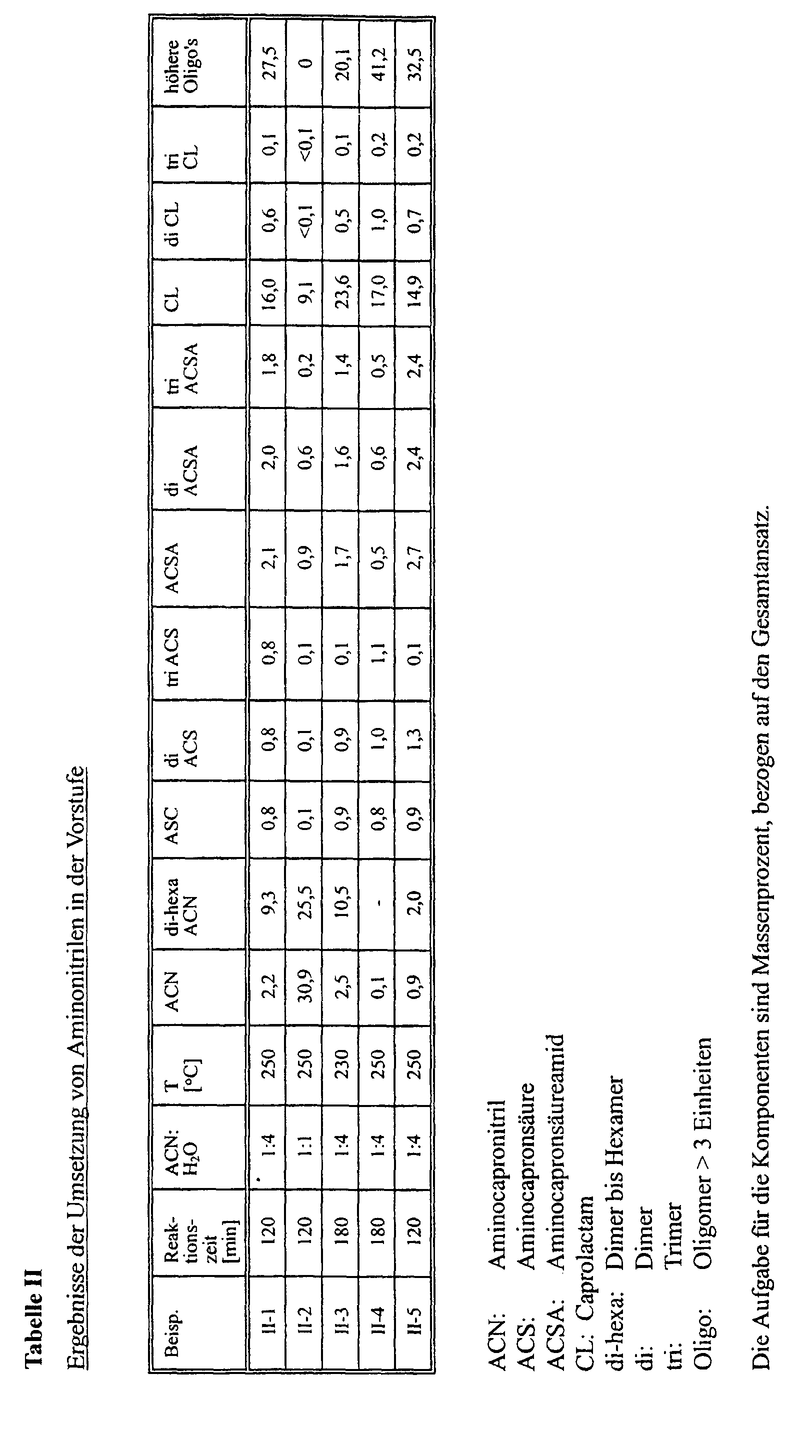

Die in der Vorstufe hergestellten Mischungen aus Aminocarbonsäureverbindungen wurden in einer vierstufigen Miniplant umgesetzt. Hierzu wurden die Eduktmischungen mit einem Wasseranteil von 50 Gew.-% bei einem Durchsatz von 600 g/h durch die erste Verfahrensstufe gepumpt. Die erste Verfahrensstufe mit einem Leervolumen von 1 Liter und einer Innenlänge von 1000 mm war vollständig mit Katalysatorgranulat gefüllt und wurde bei einer Temperatur von 240°C und einem Druck von 55 bar betrieben. Als zweite Stufe wurde ein 2 Liter-Abscheidekessel eingesetzt, in dem die Reaktionsmischung bei einer Temperatur von 250°C und einem Druck von 30 bar umgesetzt wurde. Die dritte Stufe war ein mit Raschig-Ringen (Durchmesser 6 mm, Länge 6 mm) gefülltes Strömungsrohr (Volumen 11, Länge 1000 mm, Massetemperatur der Reaktionsmischung 250°C, Druck 35 bar), in das über eine weitere beheizte Zuleitung Wasser mit einem Durchsatz von 60 g/h eingepumpt wurde. Die vierte Verfahrensstufe bestand wiederum aus einem Abscheidekessel (Volumen 2 1, Massetemperatur der Reaktionsmischung 250°C, Druck 1,2 bar), aus dem die hergestellte Polymerschmelze mit Hilfe einer Zahnradpumpe strangförmig ausgefahren wurde.

Zur Präparation der Vergleichsprodukte beziehungsweise Vergleichsbeispiele wurden Polymere ohne Katalysatoreinsatz hergestellt.

**Tabelle III**

| Ergebnisse: Kontinuierliche Umsetzung der in einer Vorstufe gemäß den Beispielen II-1 bis II-5 hergestellten Mischungen aus Aminocarbonsäureverbindungen | | |
|---|---|---|
| Beispiele | Katalysator | relative Viskosität |
| II-1 | mit | 2,08 |
| VII-1 | ohne | 1,40 |
| II-2 | mit | 1,97 |
| VII-2 | ohne | 1,30 |
| II-3 | mit | 2,00 |
| VII-3 | ohne | 1,39 |
| II-4 | mit | 2,13 |
| VII-4 | ohne | 1,62 |

## Patentansprüche

1. Verfahren zur Herstellung von Polyamiden durch Umsetzung von Aminocarbonsäureverbindungen der allgemeinen Formel I
H₂N-(CH₂)ₘ-COR¹ (I)
in der R¹ für OH, O-C₁₋₁₂-Alkyl oder NR²R³ mit R² und R³ unabhängig voneinander Wasserstoff, C₁₋₁₂-Alkyl oder C₅₋₈-Cycloalkyl und m für eine ganze Zahl von 3 bis 12 stehen,
gegebenenfalls im Gemisch mit Aminonitrilen und deren Hydrolyseprodukten, wobei der Anteil an Aminocarbonsäureverbindung(en) im Ausgangsgemisch mindestens 75 Gew.-% beträgt, gegebenenfalls in Anwesenheit von Wasser,
in flüssiger Phase bei einem Druck von 0,1 bis 35 X 10⁶Pa und einer Temperatur von 175 bis 350°C in Gegenwart von Metalloxiden als Heterogenkatalysatoren, wobei die Metalloxide in einer Form eingesetzt werden, die die mechanische Abtrennung aus dem Reaktionsgemisch erlaubt, und im Verlauf oder nach Ende der Polymerisation aus dem Reaktionsgemisch entfernt werden.

2. Verfahren nach Anspruch 1, **dadurch gekennzeichnet, daß** die Aminocarbonsäureverbindung ausgewählt ist aus 6-Aminocapronsäure, 6-Aminocapronsäuremethylester, 6-Aminocapronsäureethylester, 6-Aminocapronsäuremethylamid, 6-Aminocapronsäuredimethylamid, 6-Aminocapronsäureethylamid, 6-Aminocapronsäureamid.

3. Verfahren nach einem der Ansprüche 1 oder 2, **dadurch gekennzeichnet, daß** die Metalloxid-Katalysatoren in Form von Granulaten, Strängen, Festbetten oder beschichteten Füllkörpern oder Einbauten eingesetzt werden.

4. Verfahren nach einem der Ansprüche 1 bis 3, **dadurch gekennzeichnet, daß** die Metalloxid-Katalysatoren ausgewählt sind aus Zirkonoxid, Aluminiumoxid, Magnesiumoxid, Ceroxid, Lanthanoxid, Titandioxid, Beta-Zeolithen und Schichtsilikaten.

5. Verfahren nach einem der Ansprüche 1 bis 4, **dadurch gekennzeichnet, daß** die Metalloxid-Katalysatoren zusammen mit im Reaktionsgemisch homogen gelösten sauren Co-Katalysatoren eingesetzt werden.

6. Verfahren nach einem der Ansprüche 1 bis 5, **dadurch gekennzeichnet, daß** die Polymerisation in mindestens zwei Stufen erfolgt, wobei in der ersten Stufe unter einem Druck im Bereich von 0,1 bis 35 x 10⁶Pa gearbeitet wird, bei dem das Reaktionsgemisch mit Ausnahme des Heterogenkatalysators einphasig-flüssig vorliegt, und in der letzten Stufe bevorzugt unter einem Druck im Bereich von 0,01 x 10⁵ bis 10 x 10⁵ Pa nachkondensiert wird, wobei der Heterogenkatalysator in einer oder beiden Stufen vorliegt.

7. Verfahren nach einem der Ansprüche 1 bis 6, das die folgenden Stufen umfaßt:
(1) Umsetzung der Aminocarbonsäureverbindungen, gegebenenfalls im Gemisch mit Aminonitrilen und deren Hydrolyseprodukten, wobei der Anteil an Aminocarbonsäureverbindung(en) im Ausgangsgemisch mindestens 75 Gew.-% beträgt und gegebenenfalls in Anwesenheit von Wasser, bei einer Temperatur von 175 bis 350°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 350°C und einem Druck, der niedriger ist als der Druck in Stufe 1, die in Gegenwart eines Brönsted-Säurekatalysators, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine Gasphase und eine flüssige oder eine feste Phase oder ein Gemisch aus fester und flüssiger Phase erhalten werden, und die Gasphase von der flüssigen oder der festen Phase oder dem Gemisch aus flüssiger und fester Phase abgetrennt wird, und
(3) Versetzen der flüssigen oder der festen Phase oder des Gemischs aus flüssiger und fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird.

8. Verfahren nach Anspruch 7, das zusätzlich folgende Stufe umfaßt:
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine Wasser und gegebenenfalls Ammoniak enthaltende Gasphase und eine flüssige oder feste Phase oder ein Gemisch aus flüssiger und fester Phase, die (das) jeweils das Polyamid enthält, erhalten werden.

## Claims

1. The process for producing polyamides by reacting aminocarboxylic acid compounds of the general formula I
H₂N-(CH₂)ₘ-COR¹ (I)
where R¹ is OH, O-C₁₋₁₂-alkyl or NR²R³, where R² and R³ are independently hydrogen, C₁₋₁₂-alkyl or C₅₋₈-cycloalkyl, and m is an integer from 3 to 12,
optionally in a mixture with aminonitriles and their hydrolysis products, the proportion of aminocarboxylic acid compound(s) in the starting mixture being not less. than 75% by weight, optionally in the presence of water,
in a liquid phase at a pressure from 0.1 to 35 x 10⁶ Pa and a temperature from 175 to 350°C in the presence of metal oxides as heterogeneous catalysts, the metal oxides being used in a form which permits mechanical removal from the reaction mixture and being removed from the reaction mixture during or after the polymerization.

2. A process of claim 1, wherein the aminocarboxylic acid is selected from 6-aminocaproic acid, methyl 6-aminocaproate, ethyl 6-aminocaproate, 6-amino(N-methyl)caproamide, 6-amino(N,N-dimethyl)-caproamide, 6-amino(N-ethyl)caproamide and 6-amino-caproamide.

3. A process of either of claims 1 and 2, **characterized in that** the metal oxide catalysts are used in the form of granules, extrudates, fixed beds or coated packings or internals.

4. A process of any of claims 1 to 3, **characterized in that** the metal oxide catalysts are selected from zirconium oxide, aluminum oxide, magnesium oxide, cerium oxide, lanthanum oxide, titanium dioxide, beta-zeolites and sheet-silicates.

5. A process of any of claims 1 to 4, **characterized in that** the metal oxide catalysts are used together with acidic cocatalysts homogeneously dissolved in the reaction mixture.

6. A process of any of claims 1 to 5, **characterized in that** the polymerization is carried out in at least two stages, the first stage being carried out under a pressure within the range from 0.1 to 35 x 10⁶ Pa at which the reaction mixture with the exception of the heterogeneous catalyst is present as a single liquid phase and the last stage being preferably carried out as a postcondensation under a pressure within the range from 0.01 × 10⁵ to 10 × 10⁵ Pa, the heterogeneous catalyst being present in either or both of the stages.

7. A process of any of claims 1 to 6, comprising the following stages:
(1) reacting the aminocarboxylic acid compounds, optionally in a mixture, with aminonitriles and their hydrolysis products, the proportion of aminocarboxylic acid compound(s) in the starting mixture being not less than 75% by weight, and optionally in the presence of water, at a temperature from 175 to 350°C and a pressure from 0.1 to 35 × 10⁶ Pa in a flow pipe which is packed with a Brönsted acid catalyst selected from a beta zeolite catalyst, sheet-silicate catalyst or a titanium dioxide catalyst comprising from 70 to 100% by weight of anatase and from 0 to 30% by weight of rutile in which up to 40% by weight of the titanium dioxide may be replaced by tungsten oxide to obtain a reaction mixture,
(2) further reacting the reaction mixture at a temperature from 150 to 350°C and a pressure which is lower than the pressure in stage 1 in a reaction which may be carried out in the presence of a Brönsted acid catalyst selected from a beta zeolite catalyst, sheet-silicate catalyst or a titanium dioxide catalyst comprising from 70 to 100% by weight of anatase and 0 to 30% by weight of rutile in which up to 40% by weight of the titanium dioxide may be replaced by tungsten oxide, the temperature and pressure being selected in such a way as to obtain a gas phase and a liquid or a solid phase or a mixture of solid and liquid phase, and the gas phase being separated from the liquid or the solid phase or from the mixture of liquid and solid phase, and
(3) admixing the liquid or the solid phase or the mixture of liquid and solid phase with a gaseous or liquid phase comprising water at a temperature from 150 to 370°C and a pressure from 0.1 to 30 × 10⁶ Pa to obtain a product mixture.

8. A process of claim 7, further comprising the following stage:
(4) postcondensing the product mixture at a temperature from 200 to 350°C and a pressure which is lower than the pressure of stage 3, the temperature and pressure being selected so as to obtain a, water- and possibly ammonia-comprising gas phase and a liquid or solid phase or a mixture of liquid and solid phase, which (each) comprise the polyamide.

## Revendications

1. Procédé de préparation de polyamides par réaction de composés d'acide aminocarboxylique de la formule générale I :
H₂N-(CH₂)ₘ-COR¹ (I)
dans laquelle R¹ représente OH, O-alkyle en C₁-C₁₂ ou NR²R³, où R² et R³ représentent indépendamment l'un de l'autre de l'hydrogène, un alkyle en C₁-C₁₂ ou un cycloalkyle en C₅-C₈, et m est un nombre entier de 3 à12,
éventuellement en mélange avec des aminonitriles et leurs produits d'hydrolyse, la fraction en composé(s) d'acide aminocarboxylique dans le mélange de départ étant d'au moins 75% en poids, éventuellement en présence d'eau,
en phase liquide à une pression de 0,1 à 35 x 10⁶ Pa et à une température de 175 à 350°C en présence d'oxydes métalliques comme catalyseurs hétérogènes, les oxydes métalliques étant mis en oeuvre sous une forme qui permet la séparation mécanique hors du mélange réactionnel et qui sont éliminés du mélange réactionnel au cours de la polymérisation ou à la fin de celle-ci.

2. Procédé suivant la revendication 1, **caractérisé en ce que** le composé d'acide aminocarboxylique est choisi parmi de l'acide 6-aminocaproïque, du 6-aminocaproate de méthyle, du 6-aminocaproate d'éthyle, du méthylamide d'acide 6-aminocaproïque, du diméthylamide d'acide 6-aminocaproïque, de l'éthylamide d'acide 6-aminocaproïque, de l'amide d'acide 6-aminocaproïque.

3. Procédé suivant l'une des revendications 1 et 2, **caractérisé en ce que** les catalyseurs à base d'oxyde métallique sont mis en oeuvre sous la forme de granules, de boyaux, de lits fixes ou de corps de remplissage ou inserts enduits.

4. Procédé suivant l'une des revendications 1 à 3, **caractérisé en ce que** les catalyseurs à base d'oxyde métallique sont choisis parmi de l'oxyde de zirconium, de l'oxyde d'aluminium, de l'oxyde de magnésium, de l'oxyde de cérium, de l'oxyde de lanthane, du dioxyde de titane, des zéolithes bêta et des silicates lamellaires.

5. Procédé suivant l'une des revendications 1 à 4, **caractérisé en ce que** les catalyseurs à base d'oxyde métallique sont mis en oeuvre conjointement à des catalyseurs à base de Co acides dissous de manière homogène dans le mélange réactionnel.

6. Procédé suivant l'une des revendications 1 à 5, **caractérisé en ce que** la polymérisation a lieu en au moins deux étapes, **en ce que** dans la première étape, on opère sous une pression de l'ordre de 0,1 à 35 x 10⁶ Pa à laquelle le mélange réactionnel se présente à l'état liquide à phase unique à l'exception du catalyseur hétérogène et **en ce que**, dans la dernière étape, on effectue une postcondensation avantageusement sous une pression de l'ordre 0,01 x 10⁵ à 10 x 10⁵ Pa, le catalyseur hétérogène étant présent dans une des étapes ou les deux.

7. Procédé suivant l'une des revendications 1 à 6, qui comporte les étapes suivantes :
(1) une réaction des composés d'acide aminocarboxylique, éventuellement en mélange avec des aminonitriles et leurs produits d'hydrolyse, la fraction en composé(s) d'acide aminocarboxylique dans le mélange de départ étant de moins de 75% en poids, et éventuellement en présence d'eau, à une température de 175 à 350°C et à une pression de 0,1 à 35 x 10⁶ Pa dans un tube d'écoulement qui contient un catalyseur à base d'acide de Brönsted, choisi parmi un catalyseur à base de zéolithe bêta, de silicate lamellaire ou d'un dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, un mélange réactionnel étant obtenu,
(2) une réaction supplémentaire du mélange réactionnel à une température de 150 à 350°C et à une pression, qui est inférieure à la pression de l'étape 1, qui peut être effectuée en présence d'un catalyseur à base d'acide de Brönsted, choisi parmi un catalyseur à base de zéolithe bêta, de silicate lamellaire ou d'un dioxyde de titane constitué de 70 à 100% en poids d'anatase ou de 0 à 30% en poids de rutile, dans lequel jusqu'à 40% en poids du dioxyde de titane peuvent être remplacés par de l'oxyde de tungstène, la température et la pression étant choisies de façon à obtenir une phase gazeuse et une phase liquide ou une phase solide ou un mélange de phase liquide et de phase solide et à isoler la phase gazeuse de la phase liquide ou de la phase solide ou du mélange de phase liquide et de phase solide, et
(3) une addition à la phase liquide ou à la phase solide ou au mélange de phase liquide et de phase solide d'une phase gazeuse ou liquide qui contient de l'eau, à une température de 150 à 370°C et à une pression de 0,1 à 30 x 10⁶ Pa, un mélange-produit étant obtenu.

8. Procédé suivant la revendication 7, qui comprend en supplément l'étape suivante :
(4) une postcondensation du mélange-produit à une température de 200 à 350°C et à une pression qui est plus basse que la pression de l'étape 3, la température et la pression étant choisies de façon à obtenir une phase gazeuse contenant de l'eau et éventuellement de l'ammoniac et une phase liquide ou solide ou un mélange de phase liquide et de phase solide, qui contient respectivement le polyamide.
